# EUROPÄISCHE PATENTSCHRIFT

(11) **EP 1 929 161 B1**
(45) Veröffentlichungstag und Bekanntmachung des Hinweises auf die Patenterteilung: **31.03.2010**
(21) Anmeldenummer: 06805343.8
(22) Anmeldetag: 26.09.2006
(51) Int. Cl.: F16B 5/02, F16B 43/00, F16B 37/00

(54) **Elektrokorrosionsfreie Verbindung.**
Connection free of galvanic corrosion
Assemblage anti-corrosion galvanique

(30) Priorität: 26.09.2005 DE 202005015190 U
(43) Veröffentlichungstag der Anmeldung: 11.06.2008
(60) Teilanmeldung: 10152941.0
(73) Patentinhaber: Acument GmbH & Co. OHG, 56567 Neuwied (DE)
(72) Erfinder: HOBBS, Robert, St. Albans Hertfordshire (GB); SCHRODER, Colin, St. Albans Hertfordshire (GB)
(74) Vertreter: Beck, Alexander
(86) Internationale Anmeldenummer: PCT/DE2006/001696
(87) Internationale Veröffentlichungsnummer: WO 2007/033663

(56) Entgegenhaltungen:
- EP-A1- 0 715 086
- DE-U1- 29 911 296
- US-A- 6 029 942
- US-A1- 2003 002 919

## Beschreibung

Die vorliegende Erfindung betrifft eine elektrokorrosionsfreie Verbindung. Aufgrund der im Automobilbau zunehmenden Gewichtsrestriktionen werden dort zunehmend Bauteile aus Leichtmetallen verwendet. Es stellt sich dann häufig das Problem, eine Verbindung zwischen den immer noch weithin üblichen Stahlteilen und entsprechenden Leichtmetallbauteilen herzustellen, wobei jedoch eine direkte Berührung zwischen Stahl- und Leichtmetallteilen wegen der Gefahr der elektrochemischen Korrosion auf jeden Fall vermieden werden muss. Weiterhin müssen diese Verbindungen häufig einen Längen- und Toleranzausgleich, insbesondere zum Ausgleich der thermischen Expansion bestimmter thermisch beanspruchter Bauteile erlauben und somit muss eine gewisse seitliche Bewegung der Verbindung sowie eine leichte Winkelverschiebung möglich sein. Selbstverständlich müssen solche Verbindungen auch, wie in der Automobilindustrie allgemein gefordert, erschütterungsbeständig sein, so dass sie auch bei starken Erschütterungen sich nicht lösen und keine Geräusche verursachen, wie das bei der in der US 2003/0 002 919 beschriebenen Verbindung der Fall ist.

Die vorliegende Erfindung ist dabei aus der Aufgabe hervorgegangen, einen vollständig aus Aluminium bestehenden Kühler mit entsprechenden Stahlträgern der Karosserie zu verbinden. Hierbei kann der Kühler Temperaturen zwischen -25 und +175 °C aufweisen, wodurch sich der Kühler bis zu 1,2 mm ausdehnt. Diese Ausdehnung, und die damit verbundene seitliche Verschiebung der Verbindung muss durch eine Verbindung ausgeglichen werden. Des Weiteren muss die Verbindung auch leichte Verschwenkungen der verbundenen Werkstücke aufgrund von Beschleunigungs- oder Bremsvorgängen des Fahrzeugs ausgleichen.

Erfindungsgemäß wird die vorliegende Aufgabe durch eine elektrokorrosionsfreie Verbindung nach den Merkmalen des Anspruchs 1.

Dabei ist es besonders bevorzugt, dass der Außendurchmesser des verbreiterten Abschnitts des Gummi- oder Kunststoffteils größer oder gleich dem Außendurchmesser des verbreiterten Abschnitts des Mutternkörpers ist, da auf diese Weise eine besonders gute Isolation gegen elektrochemische Korrosionsvorgänge zwischen den unterschiedlichen Materialien der Mutter und des mutternseitigen Werkstücks sichergestellt ist.

Besonders bevorzugt ist es in beiden Fällen, wenn der nicht verbreiterte Abschnitt des Gummi- oder Kunststoffteils an seiner Mantelfläche mit Lippen versehen ist, durch die die Mutter vor der Endmontage in dem mutterseitigen Werkstück fixierbar ist. Auf diese Weise kann die Mutter bereits in das mutterseitige Werkstück bei der Herstellung dieses Werkstücks eingesetzt werden, und bis zur Endmontage des Werkstücks dort verbleiben. Auf diese Weise wird die Endmontage erheblich erleichtert.

Die vorliegende Erfindung wird im Folgenden an Hand des in den Zeichnungen dargestellten Ausführungsbeispieles näher erläutert. Es zeigt:
FIGUR 1 eine teilweise geschnittene Darstellung einer erfindungsgemäßen Verbindung sowie der erfindungsgemäßen Mutter und
FIGUR 2 eine räumliche Explosionszeichnung der erfindungsgemäßen Mutter der Figur 1.

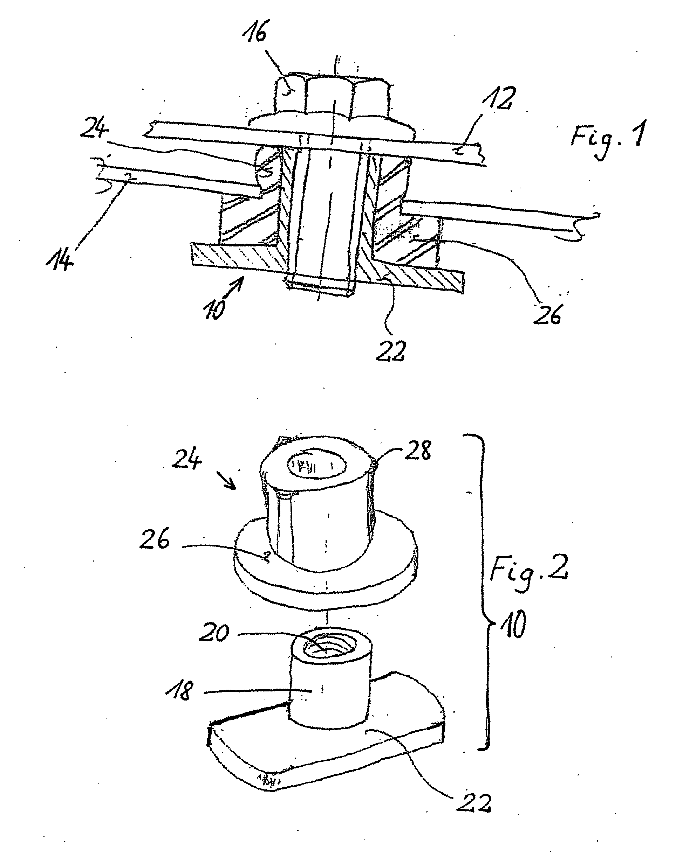

Wie in Figur 1 dargestellt, bezieht sich die vorliegende Erfindung auf eine Verbindung mit einer Spezialmutter 10, die hier zur Verbindung zweier Bauteile 12, 14 dient. Das der Mutter abgewandte Bauteil 12 ist dabei ein übliches Stahlbauteil, das mutterseitige Bauteil 14 besteht in der dargestellten Ausführungsform aus Aluminium. Selbstverständlich kann es sich dabei jedoch auch um jedes andere Leichtmetall oder eine andere Leichtmetalllegierung handeln. Aufgabe der vorliegenden Erfindung ist es nun, eine Verbindung dieser beiden Bauteile 12, 14 herzustellen, bei der jedoch sichergestellt sein muss, dass das Leichtmetallbauteil 14 keinesfalls mit dem Stahlbauteil 12 oder einer Schraube 16, die zum Verschrauben der Verbindung dient, in Berührung kommt. Ebenso wenig darf das Bauteil 14 jedoch mit den stählernen Teilen der Mutter 10 in Berührung kommen, da jede solche Berührung zur Gefahr erheblicher elektrochemischer Korrosionseffekte führt, die zur vorzeitigen Zerstörung des Leichtmetallbauteils 14 führen können.

Die Mutter 10 besteht erfindungsgemäß aus einem im Wesentlichen zylindrischen Körper 18 mit einer zentralen zentrischen Bohrung 20 mit einem Innengewinde. An dem den Werkstücken abgewandten Ende der Mutter weist der zylindrische Körper 18 einen erheblich verbreiterten Abschnitt 22 auf. Im vorliegenden Falle ist dieser "T-förmig" ausgebildet, um ein Verdrehen der Mutter gegenüber dem Bauteil 14 durch entsprechende konstruktive Gestaltung des Bauteils 14 verhindern zu können. In anderen Einsatzfällen kann dieser verbreiterte Abschnitt 22 jedoch auch zylinderförmig, d.h. mit einem kreisrunden Außenumfang gestaltet sein.

Auf dem nicht verbreiterten Abschnitt des zylindrischen Körpers 18 ist ein hohlzylindrisches Teil aus elastisch komprimierbarer Gummi- oder Kunststoffmasse aufgesetzt oder aufgespritzt. Der Innendurchmesser dieses Teils 24 entspricht dabei dem Außendurchmesser des zylindrischen Körpers 18 in dem nicht verbreiterten Abschnitt. Auch das Teil 24 weist an dem den Werkstücken 12, 14 abgewandten Ende einen verbreiterten Abschnitt 26 auf. Sofern eine Mutter mit einem kreisförmigen Außenumfang des verbreiterten Abschnitts 22 aus Metall gewählt wird, entspricht der Außendurchmesser des verbreiterten Abschnittes 26 des Gummi- oder Kunststoffteils 24 vorzugsweise dem Außendurchmesser des verbreiterten Abschnitts 22 der Mutter 10.

Das Gummi- oder Kunststoffteil 24 wird dabei entweder durch einen Presssitz auf dem nicht verbreiterten Abschnitt des zylindrischen Körpers 18 gehalten, oder im Spritzgussverfahren auf diesen aufgespritzt.

Entscheidend für die vorliegende Erfindung ist, dass das Gummi- oder Kunststoffteil 24 im nicht verschraubten Zustand der Mutter 10 am werkstückseitigen Ende ein Stück über dem zylindrischen Körper 18 hinaussteht.

Des Weiteren kann das Gummi- oder Kunststoffteil 24 mit längs verlaufenden Lippen 28 aus dem gleichen Material versehen sein, wobei die Lippen parallel zu der zentrischen Bohrung mit gleichem Abstand über die Mantelfläche des nicht verbreiterten Abschnitts des Teils 24 verteilt angeordnet sein können. Besonders bevorzugt ist es dabei, wenn drei solche Lippen vorgesehen werden.

Die Figur 2 zeigt eine entsprechende dreidimensionale Explosionszeichnung, mittels derer die Form des Metallteils und des Gummi- oder Kunststoffteils der Mutter 10 sowie die Bohrung 20 mit dem Innengewinde sowie die Gestaltung der Mantelfläche des Gummi- oder Kunststoffteils 24 mit den Lippen 28 nochmals im Einzelnen verdeutlicht wird.

Im Folgenden soll nun die erfindungsgemäße Verbindung an Hand der Figur 1 näher erläutert werden.

Die Mutter 10 wird zuerst ein eine Öffnung in dem Leichtmetall-Bauteil 14 eingesetzt. Diese Öffnung muss einen Innendurchmesser aufweisen, der dem Außendurchmesser des Gummi- oder Kunststoffteils 24 (ohne die Berücksichtigung eventueller Lippen 28) entspricht. Sofern das Teil 24 mit Lippen 28 versehen ist, ist die Mutter 10 bereits nach dem Einsetzen in das Bauteil 14 gegen Herausfallen oder Verlust gesichert, wenn das Bauteil 14 noch weiter gelagert oder transportiert wird.

Später wird dann das Bauteil 14 in üblicher Weise durch Verschrauben mit dem Bauteil 12 verbunden. Das Bauteil 12 kann dazu eine übliche Bohrung für die ebenfalls handelsübliche Schraube 16 aufweisen. Durch das Verschrauben wird das vorher über den zylindrischen Körper 18 der Mutter vorstehende Gummi- oder Kunststoffteil 24 komprimiert, so dass sein Durchmesser, wie in Figur 1 dargestellt, zunimmt. Dadurch wird das Bauteil 14 zwischen dem verbreiterten Abschnitt 26 und dem nunmehr komprimierten und zur Seite ausweichenden Bereich des Gummi- oder Kunststoffteils 24 eingezwängt. Das Bauteil 12 hingegen ist in üblicher Weise zwischen der Schraube 16 und dem zylindrischen Körper 18 der Mutter 10 fest verschraubt.

Auf diese Weise ist sichergestellt, dass stets ein ausreichender Abstand zwischen dem Bauteil 14 aus Leichtmetall und dem Stahlteilbauteil 12, Mutternkörper 18 und Schraube 16 besteht, um somit jegliche elektrochemische Korrosion zu verhindern. Des Weiteren ist auch eine hervorragende Vibrationsdämpfung sichergestellt. Darüber hinaus kann durch die Elastizität des Teils 24 eine seitliche Verschiebung, beispielsweise durch thermische Ausdehnung des Bauteils 14 oder eine Winkellageverschiebung der Bauteile 12 und 14 gegeneinander ausgeglichen werden.

Bei Bedarf kann die Verbindung durch Verwendung einer Schraube 16 mit einem entsprechenden Klebstoffüberzug zusätzlich gesichert werden.

## Patentansprüche

1. Elektrokorrosionsfreie Verbindung zwischen zwei Werkstücken (12, 14) aus unterschiedlichen Metallen, die Schwingungen dämpft und sowohl Lager- Ausdehnungs- als auch Winkeltoleranzen auszugleichen vermag, mit einer handelsüblichen Schraube (16) und einer Mutter (10), wobei in dem schraubenkopfsseitigen Werkstück (12) eine normale Bohrung vorgesehen ist, und die Mutter (10) aus einem im Wesentlichen zylindrischen Körper (18) mit einer zentralen zentrischen Bohrung (20) mit einem Innengewinde besteht, der an dem im nicht motierten Zustand der Mutter den Werkstücken (12, 14) abgewandten Ende einen verbreiterte Abschnitt (22) aufweist, wobei im nicht motierten Zustand der Mutter werkstücksseitig ein hohlzylindrisches, elastisch komprimierbares Gummi- oder Kunststoffteil (24) auf den nicht verbreiterten Abschnitt des zylindrischen Körpers (18) der Mutter aufgesetzt oder aufgespritzt ist, dessen Innendurchmesser dem Außendurchmesser des zylindrischen Körpers (18) in dem nicht verbreiterten Abschnitt entspricht, und der ebenfalls an dem im nicht motierten Zustand der Mutter den Werkstücken (12, 14) abgewandten Ende einen verbreiterten Abschnitt (26) aufweist, wobei das Gummi- oder Kunststoffteil (24) im nicht montierten Zustand der Mutter (10) werkstücksseitig über den zylindrischen Körper (18) der Mutter (10) auf die Werkstücke (12, 14) hin vorsteht, wobei die Bohrung des schraubenkopfsseitigen Werkstücks (12), das heisst des dem verbreiterten Abschnitt (22) der Mutter (10) abgewandten Werkstücks (12), eine übliche Bohrung zur Aufnahme des Schafts der zu dieser Mutter (10) passenden Schraube (16) ist, während das dem verbreiterten Abschnitt (22) der Mutter (10) zugewandte Werkstück (14) eine Bohrung mit einem Innendurchmesser aufweist, der dem Außendurchmesser des nicht verbreiterten Abschnitts des Gummi- oder Kunststoffteils (24) im nicht verschraubten Zustand entspricht, so dass im verschraubten Zustand des Verbindung das schraubenkopfsseitige Werkstück (12) in üblicher Weise zwischen Mutter (10) und Schraubenkopf der passenden Schraube (16) gehalten ist, während das dem verbreiterten Abschnitt (22) der Mutter (10) zugewandte Werkstück (14) an dem verbreiterten Abschnitt (26) des Gummi- oder Kunststoffteils (24) anliegt, während es in die andere Richtung durch die durch die Kompression des über die Mutter (10) überstehenden Gummi- oder Kunststoffteils (24) hervorgerufene Verdickung dieses Teils (24) gehalten ist.

2. Verbindung nach Anspruch 1, **dadurch gekennzeichnet, dass** der Außendurchmesser des verbreiterten Abschnitts (26) des Gummi- oder Kunststoffteils (24) größer oder gleich dem Außendurchmesser des verbreiterten Abschnitts (22) des Mutternkörpers (18) ist.

3. Verbindung nach Anspruch 1 oder 2, **dadurch gekennzeichnet, dass** der nicht verbreiterte Abschnitt des Gummi- oder Kunststoffteils (24) an seiner Mantelfläche mit Lippen (28) versehen ist, durch die die Mutter (10) vor der Endmontage in dem dem verbreiterten Abschnitt (22) der Mutter (10) zugewandten Werkstück (14) fixiert ist.

## Claims

1. Connection between two workpieces (12, 14) consisting of different metals, said connection being free of electro-corrosion, and further said connection being able to dampen vibrations and to compensate bearing tolerances, expansion tolerances, and angular tolerances, the connection having a commercial screw (16) and a nut (10), wherein in the workpiece (12) adjacent the head of the screw a normal bore is provided with the nut (10) consisting of a basically cylindrical body (18) having a central centric bore (20) provided with an interior thread, said body in the unmounted state of the nut is having at the end facing away from the workpieces (12, 14) an enlarged section (22), wherein in the unmounted state of the nut on the side of the workpieces a hollow cylindrically shaped, elastically compressible rubber or plastic member (24) is positioned or injection moulded on the non-enlarged section of the cylindrical body (18) of the nut, the interior diameter of which is corresponding to the exterior diameter of the cylindrical body (18) in the non-enlarged section, said member, too, in the unmounted state of the nut being provided with an enlarged section (26) on the end facing away from the workpieces (12, 14), wherein the rubber or plastic member (24) in the unmounted state of the nut (10) on the side of the workpieces is projecting beyond the cylindrical body (18) of the nut (10) in the direction of the workpieces (12, 14), wherein the bore of the workpiece (12) on the side of the screw head, i.e. of the workpiece (12), facing away from the enlarged section (22) of the nut (10) is a usual bore for receiving the shank of the screw (16) matching to this nut (10) while the workpiece (14) facing the enlarged section (22) of the nut (10) is having a bore with an interior diameter which is corresponding to the exterior diameter of the non-enlarged section of the rubber or plastic member (24) in the non screwed-up state such that in the screwed-up state of the connection the workpiece (12) on the side of the screw head in the usual way is held between the nut (10) and the screw head of the corresponding screw (16) while the workpiece (14) facing the enlarged section (22) of the nut (10) is contacting the enlarged section (26) of the rubber or plastic member while it is held in the other direction by the enlargement of this member (24) caused by the compression of the rubber or plastic member projecting beyond the nut (10).

2. Connection according to claim 1, **characterized in that** the exterior diameter of the enlarged section (26) of the rubber or plastic member (24) is larger than or equal to the exterior diameter of the enlarged section (22) of the nut body (18).

3. Connection according to claim 1 or 2, **characterized in that** the non enlarged section of the rubber of plastic member (24) is provided with lips (28) on its generated surface by the means of which the nut (10) is fixedly held in the workpiece (14) facing the enlarged section (22) of the nut (10).

## Revendications

1. Assemblage exempt de corrosion électrique, entre deux pièces (12, 14) constituées de métaux différents, amortissant les oscillations et corrigeant aussi bien les tolérances d'expansion de palier que les tolérances angulaires, avec une vis classique (16) et un écrou (10), un perçage normal étant prévu dans la pièce (12) située du côté de la tête de vis, et l'écrou (10) étant constitué d'un corps essentiellement cylindrique (18) avec un perçage central (20) avec filetage intérieur, corps qui, à l'état non monté de l'écrou, comporte une section élargie (22) à l'extrémité détournée des pièces (12, 14), une pièce (24) en forme de cylindre creux en plastique ou en caoutchouc élastiquement compressible étant du côté tourné vers les pièces enfoncée ou pulvérisée sur la section non élargie du corps cylindrique (18) de l'écrou, à l'état non monté de l'écrou, pièce dont le diamètre intérieur correspond au diamètre extérieur du corps cylindrique (18) dans la section non élargie, et comportant également une section élargie (26) à l'extrémité détournée des pièces (12, 14) à l'état non monté de l'écrou, la pièce en plastique ou en caoutchouc (24) faisant saillie, du côté des pièces, sur le corps cylindrique (18) de l'écrou (10), vers les pièces (12, 14), à l'état non monté de l'écrou (10), dans lequel le perçage de la pièce (12) située du côté de la tête de vis et détournée de l'écrou (10), c'est-à-dire le perçage de la pièce (12) détournée de la section élargie (22) de l'écrou, est un perçage classique pour la réception de la tige de la vis (16) correspondant à cet écrou (10), tandis que la pièce (14) tournée vers la section élargie (22) de l'écrou (10) comporte un perçage avec un diamètre intérieur correspondant au diamètre extérieur de la section non élargie de la pièce en plastique ou en caoutchouc (24) à l'état non vissé, de sorte qu'à l'état vissé de l'assemblage, la pièce (12) située du côté de la tête de vis est maintenue de façon normale, entre l'écrou (10) et la tête de vis de la vis correspondante (16), tandis que la pièce (14) tournée vers la section élargie (22) de l'écrou (10) s'applique sur la section élargie (26) de la pièce en plastique ou en caoutchouc (24), tandis que dans l'autre direction, elle est maintenue par l'épaississement de la pièce en plastique ou en caoutchouc (24), qui est entraîné par la compression de cette pièce (24) faisant saillie par-dessus l'écrou (10).

2. Assemblage selon la revendication 1, **caractérisé en ce que** le diamètre extérieur de la section élargie (26) de la pièce en plastique ou en caoutchouc (24) est supérieur ou égal au diamètre extérieur de la section élargie (22) du corps d'écrou (18).

3. Assemblage selon l'une des revendications 1 ou 2, **caractérisé en ce que** la section non élargie de la pièce en plastique ou en caoutchouc (24) est pourvu de lèvres (28) sur sa surface extérieure, au moyen desquelles l'écrou (10) est fixé dans la pièce (14) tournée vers la section élargie (22) de l'écrou (10), avant le montage final.
